# FASCICULE DE BREVET EUROPEEN

(11) **EP 3 899 341 B1**
(45) Date de publication et mention de la délivrance du brevet: **04.12.2024**
(21) Numéro de dépôt: 19845700.4
(22) Date de dépôt: 13.12.2019
(51) Int. Cl.: F16L 27/08, B05B 15/652, B05B 15/654, H02G 3/06, B05B 9/01, H02G 3/04

(54) **RACCORD ÉTANCHE À GÉOMÉTRIE VARIABLE AMÉLIORÉ**
VERBESSERTE ABGEDICHTETE VERBINDUNG MIT VARIABLER GEOMETRIE
IMPROVED VARIABLE-GEOMETRY SEALED CONNECTION

(30) Priorité: 20.12.2018 FR 1873502
(43) Date de publication de la demande: 27.10.2021
(73) Titulaire: MDC, 73460 Frontenex (FR)
(72) Inventeur: MORIS, Damien, 73200 ALBERTVILLE (FR); MORIS, Christophe, 73200 MERCURY (FR)
(74) Mandataire: Leone, Eloïse
(86) Numéro de dépôt international: PCT/FR2019/053071
(87) Numéro de publication internationale: WO 2020/128262

(56) Documents cités:
- EP-A2- 1 092 908
- CN-Y- 2 185 366
- FR-A1- 2 411 351
- GB-A- 1 448 731
- US-A- 4 791 961

## Description

### DOMAINE D'APPLICATION DE L'INVENTION

La présente invention a trait au domaine des raccords étanches à géométrie variable et notamment aux adaptations permettant de faire varier leur géométrie dans les meilleures conditions.

### DESCRIPTION DE L'ART ANTÉRIEUR

Il existe dans l'art antérieur un raccord étanche à géométrie variable du type de celui raccordant entre eux deux éléments chacun ménagé d'un trou de passage,
le raccord étanche comprenant deux corps creux préformés pour pivoter l'un par rapport à l'autre,
chaque corps comprenant chacun deux extrémités, une première extrémité et une deuxième extrémité,
les deux premières extrémités étant préformées pour coopérer ensemble et constituer une liaison pivot,
les deux deuxièmes extrémités libres coopérant chacune avec le trou de passage d'un des deux éléments à raccorder,
l'axe de cette liaison pivot étant orienté de sorte que, pour le mode de réalisation le plus courant, il permette de faire passer les axes définis par les trous de passage des éléments d'une position sensiblement coaxiale dite droite à une position angulairement différente dite coudée.

Le mot « préformé » désigne une pluralité de modes de réalisation envisagés, parmi ceux-ci :
- usinage,
- moulage,
- forgeage,
- frappe à froid,
- impression en trois dimensions,
- etc...

Un exemple est décrit dans le document FR2783301.

Ce résultat était obtenu par le fait que les corps creux pivotant l'un par rapport à l'autre présentaient deux extrémités :
- une première extrémité libre pour coopérer axialement avec le trou de passage d'un élément à connecter,
- une deuxième extrémité préformée pour constituer une liaison pivot avec l'autre corps selon un axe disposé à sensiblement quarante-cinq degrés par rapport aux axes des premières extrémités (pour une position coudée à quatre-vingt dix degrés). Ainsi, une rotation de cent-quatre-vingts degrés selon leur liaison pivot d'un corps par rapport à l'autre permettait une orientation à quatre-vingt-dix degrés de leur extrémité libre.

Une orientation angulaire différente de quarante-cinq degrés de l'axe de la liaison pivot est possible, les positions de départ et d'arrivée après une rotation de cent-quatre-vingts degrés étant alors différentes.

Ce raccord peut être exploité à des fins de création d'un passage protégé pour une pluralité de situations, parmi celles-ci :
- l'écoulement de matières pulvérulentes,
- l'écoulement de fluides,
- le passage de câbles,
- le passage de fibre(s) optique(s),
- etc...

Ce raccord a pour avantage d'offrir de plus larges possibilités de raccorder de façon étanche des éléments dans lesquels sont définis des trous de passage ou bien des éléments tubulaires tels
- deux tuyaux,
- un tuyau et un équipement (pistolet de distribution, outillage fonctionnant à l'aide de fluide),
- un tuyau solide,
- un tube rigide,
- un tube flexible,
- un tube à segments modulaires,
- coupleur rapide,
- etc...

Lorsque l'élément est tubulaire, l'extrémité ouverte du tube constitue ledit trou de passage.

En effet, en addition de la jonction d'éléments alignés ou disposés à angle droit, un tel raccord autorise la jonction étanche entre deux éléments dont les trous de passage coopérant avec le raccord ne sont pas coaxiaux ou qui ne sont pas perpendiculaires.

Cette fonction de raccord pivotant étanche implique néanmoins que le raccord subisse des efforts mécaniques à ses deux extrémités, à l'endroit où il est raccordé physiquement. Ainsi, dans certaines positions angulaires du raccord, notamment dans la position dite droite et dans celle dite coudée à l'extrême des éléments à raccorder, un point « dur » apparaît, tendant à figer la position au détriment de la facilité de mouvement autour de l'axe de pivotement. Il en résulte ainsi un inconfort pour l'utilisateur et une sensation ressentie de « blocage » anormale malgré le fait qu'aucun obstacle dans le raccord lui-même ne s'oppose au pivotement entre les deux corps qui le constitue.

Il est également connu dans l'art antérieur, le document FR2411351 qui décrit un accouplement qui en jouant sur le serrage et le desserrage d'un collier externe, autorise la rotation une fois desserré et assure le maintien en position et l'étanchéité par l'extérieur une fois serré.

Néanmoins ce document ne propose pas un raccord maintenant l'étanchéité durant la rotation quelle que soit la position angulaire prise. C'est avant et après rotation que l'étanchéité est réalisée.

De plus, ce document ne propose pas que les deux premières extrémités soient préformées pour coopérer ensemble et constituer une liaison pivot. C'est un manchon supplémentaire extérieure qui assure cette fonction.

Il est également connu du document EP1092908 un raccord de tuyau pour raccorder un premier tuyau avec une extrémité inclinée à un second tuyau comprend un manchon avec une surface sphérique. Le second tuyau est muni d'une collerette sphérique qui s'emboîte dans le manchon et peut se déplacer à l'intérieur de celui-ci. L'intérieur de la collerette sphérique présente une surface étagée qui retient le tuyau. Un anneau d'étanchéité s'insère dans une rainure annulaire à l'extérieur de la collerette et occupe l'espace entre celle-ci et le manchon.

La liaison pivot est mise en oeuvre par une liaison rotule limitée en mouvement avec la mise en contact des extrémités des portions cylindriques des tuyaux.

Il est également connu du document US4791961 un accouplement à joint tournant fluide qui comprend un élément de corps, un premier élément de raccordement et un second élément de raccordement. L'élément de corps comprend un portail d'entrée, un portail de sortie et un passage de fluide dévié les reliant.

Un tel accouplement est réalisé en trois parties et est coudé dans toutes ses positions. Il présente un encombrement trop important.

### DESCRIPTION DE L'INVENTION

Partant de cet état de fait, la demanderesse a mené des recherches visant à solutionner les inconvénients des raccords étanches à géométrie variable de l'art antérieur.

Ces recherches ont abouti à la conception et à la réalisation d'un raccord amélioré tel que décrit par la revendication 1 qui permet de transformer les efforts et les contraintes subis, en forces ou moments mécaniques permettant de supprimer les points d'équilibres structurels à l'origine des blocages présents dans le raccord en position droite et coudée.

Cette excentration résout ainsi les inconvénients des raccords de l'art antérieur en créant un bras de levier par rapport à l'axe rotation de la liaison pivot. Le point « dur » jusqu'ici constaté ne sera plus présent puisque le bras de levier créé donne la possibilité d'un moment mécanique à la force appliquée au raccord lorsque son utilisation requiert son pivotement. Cet effet technique créé par cette disposition novatrice des axes, est quantifiable et est efficace, selon les dimensions du raccord, à partir de quelques centièmes de millimètres de décalage en respectant les paramètres de compacité nécessaires à ce type d'équipement.

En effet, la demanderesse a pu constater que la coaxialité et la concourance des axes en un même point en position droite et la concourance en un même point en position coudée qui sont des configurations recherchées pour l'écoulement des fluides étaient aussi la cause de la création desdits points « durs ». En acceptant de décaler les axes, en les rendant non coplanaires, la demanderesse propose une configuration non conventionnelle, plus difficile à fabriquer mais résolvant les problèmes de l'art antérieur.

L'axe des extrémités libres d'au moins un des corps pivotants est donc décalé par rapport à l'axe de ladite liaison pivot de sorte que l'axe du trou de passage ménagé dans l'élément à raccorder et donc l'élément à raccorder lui-même soit décalé par rapport à l'axe de ladite liaison pivot.

De plus, la bague de serrage assure le maintien en position de la position angulaire atteinte par les deux corps.

Selon une autre caractéristique particulièrement avantageuse de l'invention, l'axe de cette liaison pivot permet de faire passer les axes des trous de passage desdits éléments d'une position sensiblement coaxiale à une position sensiblement perpendiculaire.

Plusieurs configurations non limitatives sont possibles pour créer ledit décalage, parmi celles-ci :
- le décalage est un écart linéaire,
- le décalage est un écart linéaire et angulaire,
- le décalage est créé par le décalage linéaire d'un alésage et d'un filetage intérieur ménagé dans l'extrémité libre d'au moins un corps,
- le décalage est créé par le décalage linéaire et l'inclinaison d'un alésage et d'un filetage intérieur ménagé dans l'extrémité libre d'au moins un corps,
- le décalage est créé par la réalisation d'un filetage extérieur selon un axe décalé linéairement et/ou incliné angulairement,
- usinage décalé,
- forme de raccordement,
- etc...

Une autre caractéristique concerne l'étanchéité de la liaison pivot. En effet, cette dernière est soumise à des contraintes différentes du fait du ou des décalages proposés par la nouvelle configuration du raccord. Ces contraintes peuvent dans certains cas, rendre impossible l'utilisation d'un joint torique classique.

Ainsi, selon une autre caractéristique particulièrement avantageuse de l'invention, ladite liaison pivot est rendue étanche par un joint à lèvres. Il y a ainsi donc toujours une lèvre restant en contact. Selon un mode de réalisation préféré, ledit joint est du type à deux lèvres et adopte une section en V.
Selon un autre mode de réalisation préféré, ledit joint est du type à quatre lèvres et adopte une section en X.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, plusieurs modes de réalisation d'un raccord conforme à l'invention.

### BRÈVE DESCRIPTION DES DESSINS

La figure 1 est un dessin schématique d'une vue extérieure de face d'un mode de réalisation d'un raccord non couvert par le texte des revendications mais considéré comme utile à la compréhension de l'invention, en position droite ;
La figure 2 est un dessin schématique d'une vue extérieure de face du raccord de la figure 1 en position coudée à l'extrême ;
La figure 3 est un dessin schématique d'une vue extérieure de dessus du raccord de la figure 1 dans la position de la figure 1 ;
La figure 4 est un dessin schématique d'une vue extérieure de dessus du raccord de la figure 1 dans la position de la figure 2 ;
La figure 5 est un dessin schématique d'une vue extérieure de dessus d'un deuxième mode de réalisation d'un raccord non couvert par le texte des revendications mais considéré comme utile à la compréhension de l'invention, en position droite ;
La figure 6 est un dessin schématique d'une vue extérieure de dessus d'un troisième mode de réalisation d'un raccord non couvert par le texte des revendications mais considéré comme utile à la compréhension de l'invention, en position droite ;
La figure 7 est un dessin schématique d'une vue extérieure de dessus d'un quatrième mode de réalisation d'un raccord non couvert par le texte des revendications mais considéré comme utile à la compréhension de l'invention, en position droite ;
La figure 8 est un dessin schématique d'une vue en coupe partielle de dessus d'un cinquième mode de réalisation d'un raccord, celui-ci étant conforme à l'invention, en position droite ;
La figure 9 est un dessin schématique d'une vue en coupe partielle de dessus d'un sixième mode de réalisation d'un raccord, celui-ci étant conforme à l'invention, en position droite ;
La figure 10 est un dessin schématique d'une vue extérieure de face des raccords des figures 8 et 9 ;
La figure 11 est un dessin schématique d'une vue extérieure de face d'un septième mode de réalisation très proche de ceux illustrés par les dessins des figures 8, 9 et 10;
La figure 12 est un dessin schématique d'une vue extérieure d'un exemple d'utilisation de deux raccords conformes à celui qu'illustré par le dessin de la figure 11 ;
La figure 13 est un dessin schématique d'une vue extérieure de face d'un huitième mode de réalisation d'un raccord non couvert par le texte des revendications mais considéré comme utile à la compréhension de l'invention, en position droite ;
La figure 14 est un dessin schématique d'une vue en coupe partielle de dessus du raccord de la figure 13;
La figure 15 est un dessin schématique d'une vue extérieure d'un exemple d'utilisation d'un raccord conforme à celui illustré par le dessin de la figure 13 ;
La figure 16 est un dessin schématique d'une vue extérieure de face d'un neuvième mode de réalisation d'un raccord non couvert par le texte des revendications mais considéré comme utile à la compréhension de l'invention, en position droite ;
La figure 17 est un dessin schématique d'une vue en coupe partielle de dessus du raccord de la figure 16 ;
La figure 18 est un dessin schématique d'un exemple d'utilisation d'un raccord conforme à celui illustré par le dessin de la figure 11.

### DESCRIPTION DES MODES DE RÉALISATION PRÉFÉRÉS

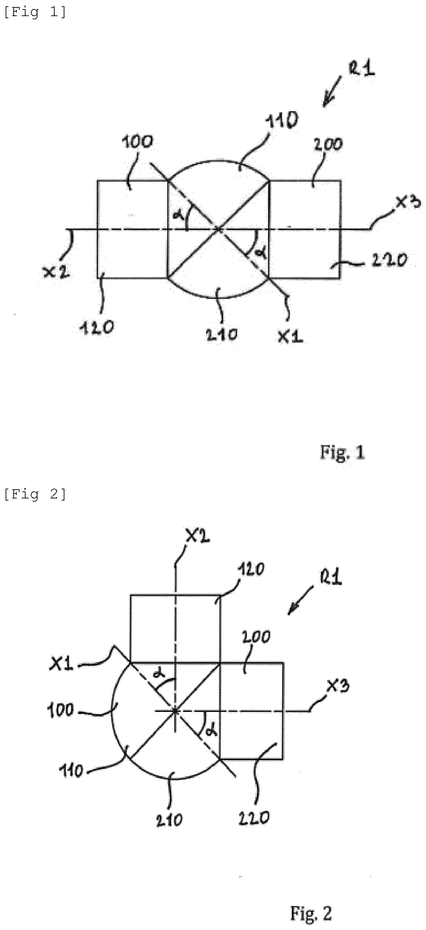

Comme illustré sur les dessins des figures 1, 2, 3 et 4, le raccord étanche à géométrie variable référencé R1 dans son ensemble est du type de celui raccordant deux éléments tubulaires entre eux (non illustrés).

Ce raccord étanche R1 comprend deux corps creux 100 et 200 préformés pour pivoter l'un par rapport à l'autre. Chaque corps 100 et 200 comprend chacun deux extrémités, une première extrémité 110 et 210 et une deuxième extrémité 120 et 220.

Les deux premières extrémités 110 et 210 sont préformées pour coopérer ensemble de sorte que leurs âmes creuses respectives (non illustrées) communiquent et pour constituer une liaison pivot.

Les deux deuxièmes extrémités libres 120 et 220 accueillent chacune l'extrémité d'un des deux éléments tubulaires (non illustrés) à raccorder.

Dans le plan de projection de la figure 1, les deux corps 100 et 200 sont préformés de façon à ce que l'axe X1 de la liaison pivot qu'ils forment est positionné selon un angle α de sensiblement 45 degrés qui permet de faire passer les axes des éléments tubulaires (non illustrés) d'une position sensiblement coaxiale illustrée par le dessin de la figure 1 à une position sensiblement perpendiculaire illustrée par le dessin de la figure 2.

Au moins un des corps 100 ou 200 est préformé de façon à ce que l'axe de l'élément tubulaire qu'il accueille soit décalé par rapport à l'axe de la liaison pivot, ne soit donc ni sécant ni confondu avec l'axe de la liaison pivot qu'il forme avec l'autre corps de sorte que la rotation des corps entre eux soit facilitée du fait de l'excentration des axes.

Le raccord R1 est préformé de sorte que les deux corps 100 et 200 sont préformés pour créer ce décalage.

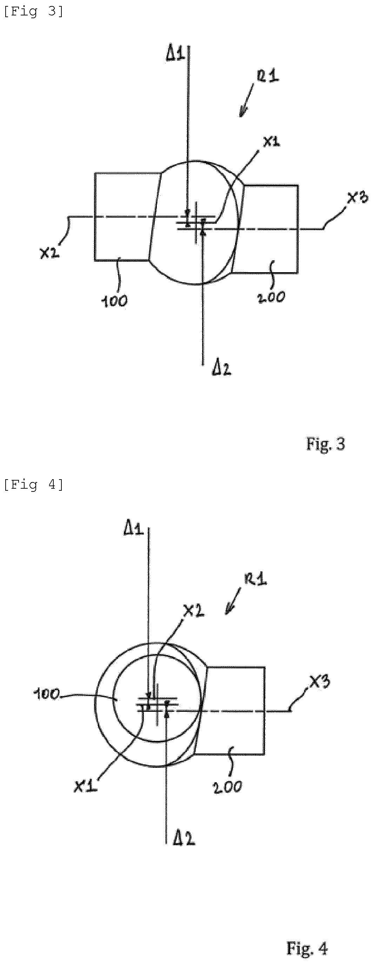

Dans le plan de projection des figures 3 et 4, on comprend que les axes X2 et X3 des extrémités libres respectivement 120 et 220 des corps creux 100 et 200 sont décalés dans l'espace par rapport au plan dans lequel se trouvent l'axe de pivotement X1 qui les lient. En vues de face (figures 1 et 2), X2 et X3 sont coplanaires alors qu'en vue de dessus ils sont disposés dans des plans verticaux différents de part et d'autre du plan dans lequel se trouve l'axe X1. Ce décalage évite la présence de points « durs » dans la position droite et coudée en créant des bras de levier Δ 1 et Δ 2 par rapport à l'axe de rotation X1 de la liaison pivot entre les deux corps 100 et 200.

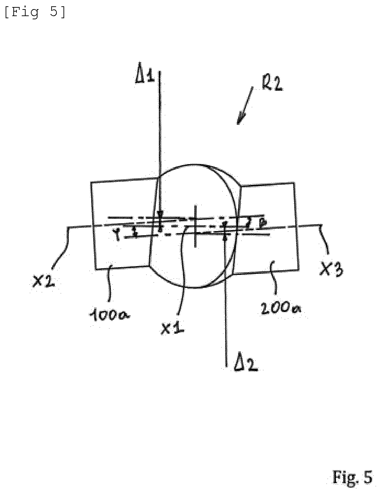

Alors que pour R1, le décalage est linéaire c'est-à-dire que les axes sont décalés horizontalement dans le plan de projection des figures 3 et 4, le mode de réalisation illustré par le dessin de la figure 5 montre un raccord R2 où le décalage peut également être angulaire. Ainsi, le décalage est constitué ici par le fait que les axes X2 et X3 des deuxièmes extrémités des corps 100a et 200a sont non seulement décalés linéairement selon Δ 1 et Δ 2 par rapport au plan de X1 mais également angulairement selon les angles β et γ.

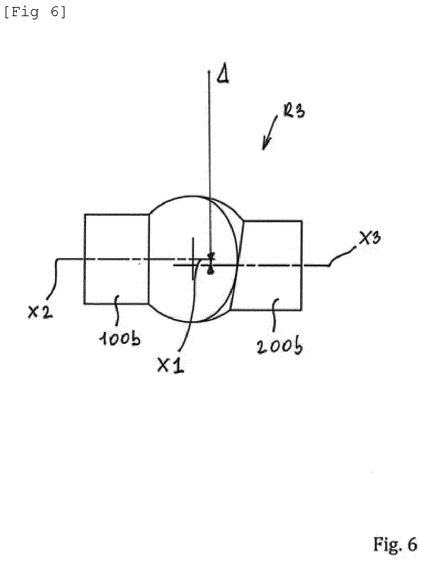

Le raccord R3 illustré par le dessin de la figure 6 respecte un autre mode de réalisation où seule l'extrémité libre du corps creux 200b est préformée de façon à créer un décalage linéaire Δ. Les axes X2 et X1 sont alors coplanaires aussi bien en vue de face qu'en vue de dessus.

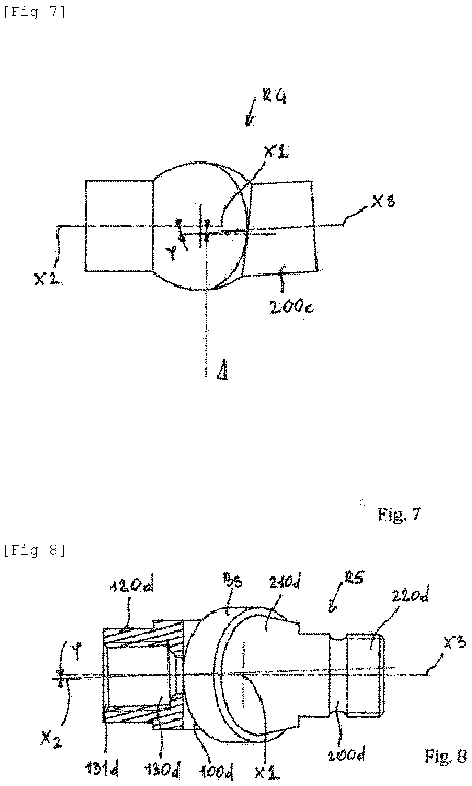

Le raccord R4 illustré par le dessin de la figure 7 respecte un autre mode de réalisation où seule l'extrémité libre du corps creux 200c est préformée de façon à créer un décalage angulaire γ et linéaire Δ entre les axes X3 et X1. Les axes X2 et X1 sont comme pour le mode de réalisation précédent, coplanaires aussi bien en vue de face qu'en vue de dessus.

Les raccords illustrés par les figures suivantes sont illustrés de façon plus précise mais reprennent les principes des modes de réalisation ci-dessus décrits. De plus, bien que les modes de réalisation préférés mais non limitatifs illustrés soient usinés, une pluralité de modes de préformation est possible.

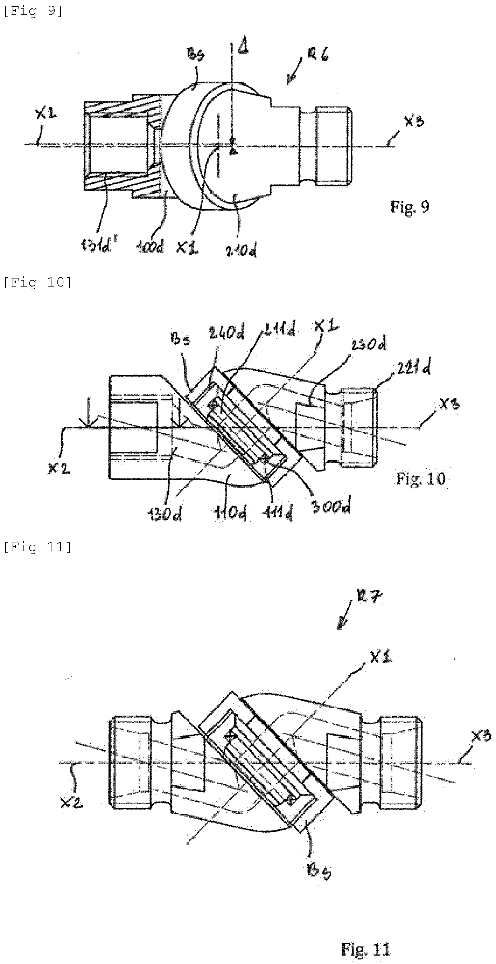

Les raccords R5 et R6 illustrés par les dessins des figures 8 et 10 pour R5 et 9 et 10 pour R6, comprennent deux corps creux 100d et 200d préformés pour pivoter l'un par rapport à l'autre. La figure 10 constitue une vue de face correspondant à la fois à R5 et R6, du fait de l'absence de différence à cette échelle dans la projection en vue de face des figures 8 et 9. Chaque corps 100d et 200d comprend chacun deux extrémités, une première extrémité 110d et 210d et une deuxième extrémité 120d et 220d.

Les deux premières extrémités 110d et 210d sont préformées pour coopérer ensemble de sorte que les âmes creuses 130d et 230d respectives de chaque corps communiquent et pour constituer une liaison pivot. Pour ce faire les deux premières extrémités 110d et 210d sont préformées d'un alésage 111d pour l'extrémité 110d et d'une forme en saillie 211d de forme adaptée pour l'extrémité 210d. Cet alésage 111d et cette forme en saillie cylindrique 211d sont orientés tous les deux selon un axe X1 disposé dans le plan de projection de la figure 10 à 45 degrés (angle α) des axes X2 et X3 des deux extrémités 120d et 220d. Cet alésage et cette projection cylindrique coopèrent pour former un palier de guidage constituant la liaison pivot. Un joint à lèvres 300d vient assurer l'étanchéité de la liaison pivot.

Les deux deuxièmes extrémités libres 120d et 220d accueillent chacune l'extrémité d'un des deux éléments tubulaires (non illustrés) à raccorder. Pour mettre en oeuvre cet accueil, la deuxième extrémité 120d du premier corps 100d est préformée de façon à ce que l'âme creuse 130d soit filetée intérieurement pour déboucher sur une portion filetée 131d avec laquelle peut coopérer un premier élément tubulaire (non illustré). De plus, la surface extérieure de la deuxième extrémité 220d du deuxième corps 200d est préformée pour former un manchon fileté 221d avec lequel peut coopérer un deuxième élément tubulaire (non illustré).

Dans le plan de projection de la figure 10, les deux corps 100 et 200 sont préformés de façon à ce que l'axe X1 de la liaison pivot qu'ils forment est positionné selon un angle α de sensiblement 45 degrés qui permet de faire passer les axes des éléments tubulaires (non illustrés) d'une position sensiblement coaxiale illustrée par le dessin de la figure 10 à une position sensiblement perpendiculaire (non illustrée mais reprenant le principe illustré par le dessin de la figure 2).

Le décalage proposé par l'invention est mis en oeuvre par la façon dont est usinée la portion filetée 131d qui en accueillant le premier élément tubulaire va l'orienter angulairement et former l'axe X2.

Ainsi, pour R5 illustré par les dessins des figures 8 et 10 (et correspondant au mode de réalisation illustré schématiquement par le dessin de la figure 7), le décalage angulaire y et linéaire Δ est mis en oeuvre par l'orientation angulaire inclinée de l'alésage et du filetage de la portion 131d.

Pour R6, illustré par les dessins des figures 9 et 10 (et correspondant au mode de réalisation illustré schématiquement par le dessin de la figure 6), le décalage linéaire Δ est mis en oeuvre par le décalage linéaire de l'axe X2 de l'alésage et du filetage de la portion 131d'.

Que ce soit pour R5 ou pour R6, aucun décalage n'est proposé par le deuxième corps 200d et X3 est donc coplanaire avec X1.

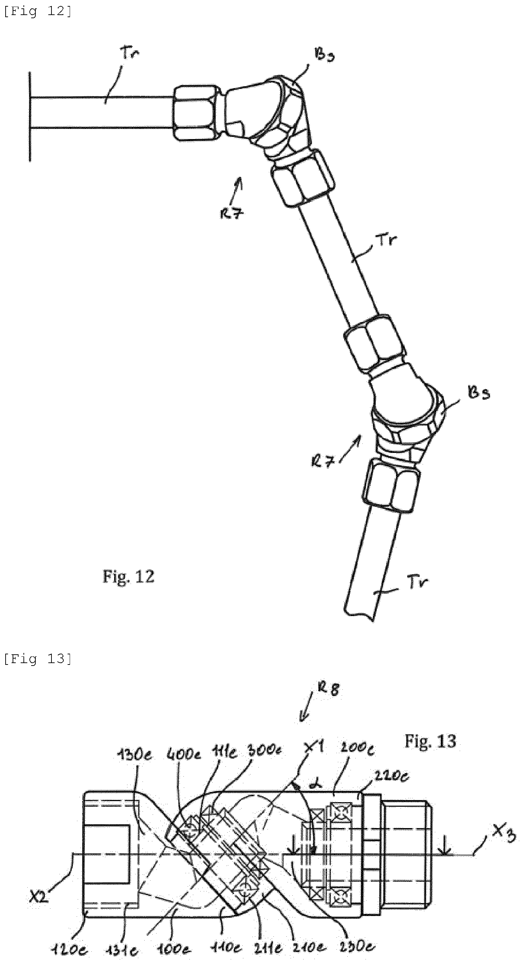

Un autre mode de réalisation R7 est illustré par le dessin de la figure 11, ce mode de réalisation reprend les caractéristiques des modes de réalisation illustrés par les dessins des figures 8, 9 et 10 à l'exception près que le décalage est créé par la réalisation d'un filetage extérieur (et non intérieur) selon un axe décalé linéairement et/ou incliné angulairement. Ce raccord R7 est utilisé en deux exemplaires dans l'exemple d'utilisation illustré par le dessin de la figure 12 où on retrouve des tubes rigides Tr et deux raccords à géométrie variable R7 qui permettent de les connecter avec différents angles.

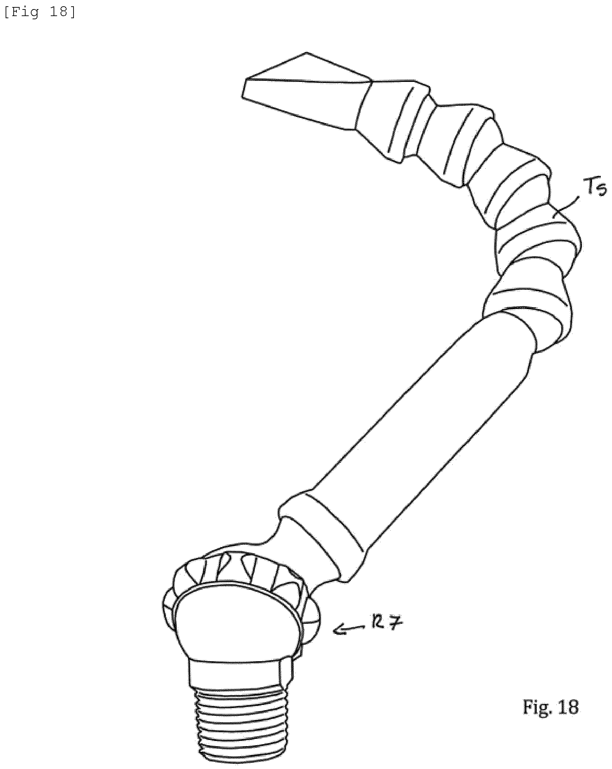

Ces modes de réalisation R5, R6, R7 ont pour autre point commun d'être équipés d'une bague de serrage Bs qui, guidée en rotation à une première extrémité 210d d'un premier corps 200d vient par vissage coopérer avec un filetage préformé dans la première extrémité 110d d'un deuxième corps 100d, ce qui permet de bloquer en position les deux corps 100d et 200d une fois la bonne position angulaire atteinte. Cette bague de serrage Bs peut prendre la forme extérieure d'un écrou comme illustrée sur le dessin de la figure 12 ou d'une molette comme illustrée sur le dessin de la figure 18 qui montre l'utilisation du raccord de l'invention R7 pour raccorder un tube à segments modulaires Ts du type de ceux retenant, alimentant et orientant une buse.

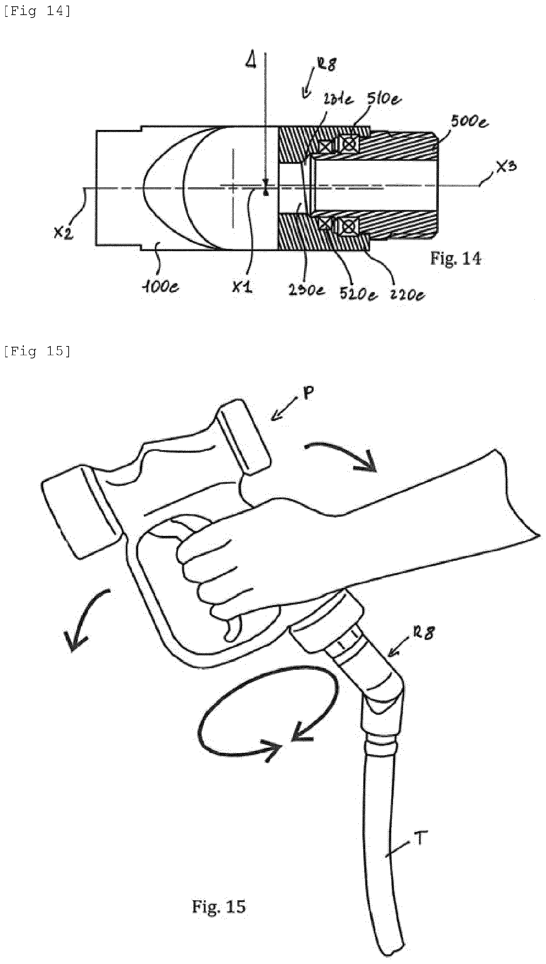

Bien que non couvert par le texte des revendications mais considéré comme utile à la compréhension de l'invention, un autre mode de réalisation d'un raccord R8 est illustré par les dessins des figures 13 et 14. Ce raccord R8 est illustré en situation d'utilisation dynamique par le dessin de la figure 15 où il assure le raccordement d'un pistolet manuel P et d'un tuyau souple d'alimentation T, le raccord R7 permet de faciliter le mouvement en limitant les efforts dus au flexible.

Ce raccord R8 comprend deux corps creux 100e et 200e préformés pour pivoter l'un par rapport à l'autre. Chaque corps 100e et 200e comprend chacun deux extrémités, une première extrémité 110e et 210e et une deuxième extrémité 120e et 220e.

Les deux premières extrémités 110e et 210e sont préformées pour coopérer ensemble de sorte que les âmes creuses 130e et 230e respectives de chaque corps communiquent et pour constituer une liaison pivot. Pour ce faire les deux premières extrémités 110e et 210e sont préformées d'une forme en saillie cylindrique 111e pour l'extrémité 110e et d'un alésage 211e de forme adaptée pour l'extrémité 210e. Cette forme en saillie cylindrique 111e et cet alésage 211e sont orientés tous les deux selon un axe X1 disposé dans le plan de projection de la figure 13 à 45 degrés (angle α) des axes X2 et X3 des deux extrémités 120e et 220e. Cet alésage et cette projection cylindrique coopèrent pour former un palier de guidage constituant la liaison pivot. Un joint à lèvres 300e vient assurer l'étanchéité de la liaison pivot. Un roulement 400e ou élément de guidage tournant assure le guidage en rotation.

Les deux deuxièmes extrémités libres 120e et 220e accueillent chacune l'extrémité d'un des deux éléments tubulaires (cf. figure 15) à raccorder. Pour mettre en oeuvre cet accueil, la deuxième extrémité 120e du premier corps 100e est préformée de façon à ce que l'âme creuse 130e soit filetée intérieurement pour déboucher sur une portion filetée 131e avec laquelle peut coopérer un premier élément tubulaire (cf. figure 15). De plus, la deuxième extrémité 220e du deuxième corps 200d est préformée de façon à ce que l'extrémité débouchante de l'âme creuse 230e forme un palier d'accueil 231e à un joint tournant 500e guidé par un roulement 510e et associé à un joint 520e permettant de respecter l'étanchéité. C'est ce joint tournant 500e qui accueille l'extrémité de l'élément tubulaire (cf. figure 15) à raccorder.

Dans le plan de projection de la figure 13, les deux corps 100e et 200e sont préformés de façon à ce que l'axe X1 de la liaison pivot qu'ils forment est positionné selon un angle α de sensiblement 45 degrés qui permet de faire passer les axes des éléments tubulaires (non illustrés) d'une position sensiblement coaxiale illustrée par le dessin de la figure 13 à une position sensiblement perpendiculaire (non illustrée mais reprenant le principe illustré par le dessin de la figure 2).

Comme illustré par le dessin de la figure 14, le décalage est mis en oeuvre par la façon dont est usiné le palier d'accueil 231e qui en accueillant le joint tournant 500e va le positionner. Cet usinage n'est pas axial mais excentré linéairement selon un écart Δ. L'axe X3 de l'alésage 231e et du joint tournant qu'il accueille est donc excentré par rapport à l'axe X1.

Pour R8 qui correspond au mode de réalisation illustré schématiquement par le dessin de la figure 6, aucun décalage n'est proposé par le premier corps 100e et X2 est donc coplanaire avec X1.

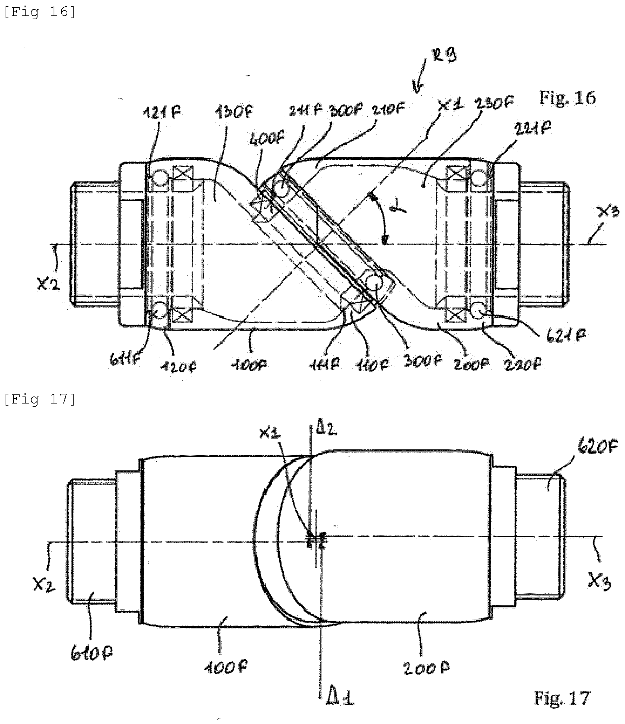

Bien que non couvert par le texte des revendications mais considéré comme utile à la compréhension de l'invention, un autre mode de réalisation d'un raccord R9 est illustré par les dessins des figures 16 et 17.

Ce raccord R9 comprend deux corps creux 100f et 200f préformés pour pivoter l'un par rapport à l'autre. Chaque corps 100f et 200f comprend chacun deux extrémités, une première extrémité 110f et 210f et une deuxième extrémité 120f et 220f.

Les deux premières extrémités 110f et 210f sont préformées pour coopérer ensemble de sorte que les âmes creuses 130f et 230f respectives de chaque corps communiquent et pour constituer une liaison pivot. Pour ce faire les deux premières extrémités 110f et 210f sont préformées d'un alésage 111f pour l'extrémité 110f et d'une forme en saillie cylindrique 211f de forme adaptée pour l'extrémité 210f. Cette forme en saillie cylindrique 211f et cet alésage 111f sont orientés tous les deux selon un axe X1 disposé dans le plan de projection de la figure 16 à 45 degrés (angle α) des axes X2 et X3 des deux extrémités 120f et 220f. Cet alésage et cette projection cylindrique coopèrent pour former un palier de guidage constituant la liaison pivot. Des billes ou des éléments de guidage tournant 300f assurent le guidage en rotation. Un joint à lèvres 400f assure l'étanchéité.

Les deux deuxièmes extrémités libres 120f et 220f accueillent chacune l'extrémité d'un des deux éléments tubulaires (non illustrés) à raccorder. Pour mettre en oeuvre cet accueil, les deux deuxièmes extrémités 120f et 220f sont chacune préformées d'un alésage 121f et 221f d'accueil d'un manchon cylindrique creux 610f et 620f dont une première extrémité s'engage et est guidée en rotation dans l'alésage respectivement 121f et 221f ménagé dans la deuxième extrémité et dont l'autre extrémité est filetée pour accueillir l'extrémité de l'élément tubulaire à raccorder (non illustré).

Des roulements ou éléments de guidage tournant 611f et 621f viennent assurer ledit guidage en rotation entre lesdits manchons 610f et 620f et les alésages 111f et 121f dans lesquels ils sont engagés.

Dans le plan de projection de la figure 16, les deux corps 100f et 200f sont préformés de façon à ce que l'axe X1 de la liaison pivot qu'ils forment est positionné selon un angle α de sensiblement 45 degrés qui permet de faire passer les axes des éléments tubulaires (non illustrés) d'une position sensiblement coaxiale illustrée par le dessin de la figure 9 à une position sensiblement perpendiculaire (non illustrée mais reprenant le principe illustré par le dessin de la figure 2).

Comme illustré par le dessin de la figure 17, le décalage est mis en oeuvre par la façon dont sont usinés les alésages 111f et/ou le manchon 211f pivotant à l'intérieur. Cet usinage n'est pas axial mais excentré linéairement selon un écart Δ1 et Δ2 comme illustré par le dessin la figure 17.

On comprend que le raccord, qui vient d'être ci-dessus décrit et représenté, l'a été en vue d'une divulgation plutôt que d'une limitation. Bien entendu, divers aménagements, modifications et améliorations pourront être apportés aux exemples ci-dessus, sans pour autant sortir du cadre de l'invention tel que défini par les revendications.

## Revendications

1. Raccord étanche (R5) à géométrie variable du type de celui raccordant entre eux deux éléments chacun ménagé d'un trou de passage,
le raccord étanche comprenant deux corps creux (100d, 200d) préformés pour pivoter l'un par rapport à l'autre,
chaque corps (100d, 200d) comprenant chacun deux extrémités, une première extrémité (110d, 210d) et une deuxième extrémité (120d, 220d),
les deux premières extrémités (110d, 210d) étant préformées pour coopérer ensemble et constituer une liaison pivot,
les deux deuxièmes extrémités libres (120d, 220d) étant chacune apte à coopérer avec le trou de passage d'un des éléments à raccorder,
l'axe (X1) de cette liaison pivot permettant de faire passer les axes des deux extrémités libres correspondant aux trous de passage d'une position droite à une position coudée,
une première extrémité d'un premier des corps étant préformée d'un manchon cylindrique (211d) coopérant avec une cavité cylindrique (111d) préformée dans la première extrémité Z d'un deuxième des corps pour mettre en oeuvre la liaison pivot,
au moins un des corps (100d ou 200d) étant préformé de façon à ce que l'axe (X2 ou X3) de sa deuxième extrémité correspondant au trou de passage de l'élément avec lequel il est apte à coopérer soit décalé par rapport à l'axe de la liaison pivot (X1), et ne soit donc ni sécant ni confondu avec l'axe de la liaison pivot (X1) qu'il forme avec l'autre des corps de sorte que
la rotation des corps (100d, 200d) entre eux soit facilitée du fait de l'excentration des axes,
**CARACTERISE PAR LE FAIT QUE**
une bague de serrage (Bs), guidée en rotation à une première extrémité (210d) du premier corps (200d), vient par vissage coopérer avec un filetage préformé sur la première extrémité (110d) du deuxième corps (100d), ce qui permet de bloquer en position les deux corps (100d et 200d) une fois la bonne position angulaire atteinte.

2. Raccord (R5) selon la revendication 1, **CARACTÉRISÉ PAR LE FAIT QUE** l'axe de cette liaison pivot permet de faire passer les axes des trous de passage desdits éléments d'une position sensiblement coaxiale à une position sensiblement perpendiculaire.

3. Raccord (R6) selon la revendication 1 ou 2, **CARACTÉRISÉ PAR LE FAIT QUE** le décalage est un écart linéaire.

4. Raccord (R5) selon la revendication 1 ou 2, **CARACTÉRISÉ PAR LE FAIT QUE** le décalage est un écart linéaire et angulaire.

5. Raccord (R6) selon la revendication 3, **CARACTÉRISÉ PAR LE FAIT QUE** le décalage est créé par le décalage linéaire d'un alésage et d'un filetage intérieur ménagé dans l'extrémité libre d'au moins un des corps.

6. Raccord (R5) selon la revendication 4, **CARACTÉRISÉ PAR LE FAIT QUE** le décalage est créé par le décalage linéaire et l'inclinaison d'un alésage et d'un filetage intérieur ménagé dans l'extrémité libre d'au moins un des corps.

7. Raccord (R7) selon la revendication 3, **CARACTÉRISÉ PAR LE FAIT QUE** le décalage est créé par la réalisation d'un filetage extérieur selon un axe décalé linéairement et/ou incliné angulairement.

8. Raccord (R8) selon la revendication 1, **CARACTÉRISÉ PAR LE FAIT QUE** ladite liaison pivot est rendue étanche par un joint (300d) à lèvres.

## Patentansprüche

1. Abdichtendes Anschlussstück (R5) mit veränderbaren Abmessungen, welches bauartbedingt eine Verbindung zwischen zwei Elementen schafft, in denen jeweils ein Durchgangsloch vorgesehen ist,
wobei das abdichtende Anschlussstück zwei Hohlkörper (100d, 200d) umfasst, die derart vorgeformt sind, dass sie zueinander drehbar sind,
wobei jeder Körper (100d, 200d) jeweils zwei Enden umfasst, ein erstes Ende (110d, 210d) und ein zweites Ende (120d, 220d),
wobei die beiden ersten Enden (110d, 210d) derart vorgeformt sind, dass sie zusammenwirken und eine Drehgelenkverbindung darstellen, wobei die beiden freien Enden (120d, 220d) jeweils dafür geeignet sind, mit dem Durchgangsloch eines der zu verbindenden Elemente zusammenzuwirken,
wobei es die Achse (X1) dieser Drehgelenkverbindung ermöglicht, die Achsen der beiden freien Enden, welche den Durchgangslöchern entsprechen, von einer geraden Stellung in eine abgewinkelte Stellung zu überführen, wobei ein erstes Ende eines ersten der Körper derart vorgeformt ist, dass es eine erste zylindrische Manschette (211d) aufweist, die mit einem zylindrischen Hohlraum (111d) zusammenwirkt, welcher im ersten Ende eines zweiten der Körper vorgeformt ist, um die Drehgelenkverbindung herzustellen,
wobei mindestens einer der Körper (100d oder 200d) derart vorgeformt ist, dass die Achse (X2 oder X3) seines zweiten Endes, welches dem Durchgangsloch des Elements entspricht, mit dem es zusammenwirken kann, gegenüber der Achse der Drehgelenkverbindung (X1) versetzt ist und somit die Achse der Drehgelenkverbindung (X1), welche er mit dem anderen der Körper bildet, weder schneidet noch mit dieser zusammenfällt, sodass die Drehbewegung (100d, 200d) zwischen ihnen aufgrund der exzentrischen Anordnung der Achsen erleichtert wird,
**DADURCH GEKENNZEICHNET, DASS**
ein Klemmring (Bs), dessen Drehbewegung an einem ersten Ende (210d) des ersten Körpers (200d) geführt ist, durch einen Schraubvorgang mit einem Gewinde in Zusammenwirkung gebracht wird, das am ersten Ende (110d) des zweiten Körpers (100d) vorgeformt ist, wodurch es ermöglicht wird, die Stellung der beiden Körper (100d und 200d) zueinander zu blockieren, sobald die richtige Winkelstellung erreicht ist.

2. Anschlussstück (R5) nach Anspruch 1, **DADURCH GEKENNZEICHNET, DASS** die Achse dieser Drehgelenkverbindung es ermöglicht, die Achsen der Durchgangslöcher der Elemente von einer im Wesentlichen koaxialen Stellung in eine im Wesentlichen rechtwinklige Stellung zu überführen.

3. Anschlussstück (R6) nach Anspruch 1 oder 2, **DADURCH GEKENNZEICHNET, DASS** es sich bei dem Versatz um eine Beabstandung entlang einer Linie handelt.

4. Anschlussstück (R5) nach Anspruch 1 oder 2, **DADURCH GEKENNZEICHNET, DASS** es sich bei dem Versatz um eine Beabstandung entlang einer Linie und gemäß einem Winkel handelt.

5. Anschlussstück (R6) nach Anspruch 3, **DADURCH GEKENNZEICHNET, DASS** der Versatz geschaffen wird, indem eine Bohrung gegenüber einem Innengewinde, welches in dem freien Ende mindestens eines der Körper vorgesehen ist, entlang einer Linie versetzt wird.

6. Anschlussstück (R5) nach Anspruch 4, **DADURCH GEKENNZEICHNET, DASS** der Versatz geschaffen wird, indem eine Bohrung gegenüber einem Innengewinde, welches in dem freien Ende mindestens eines der Körper vorgesehen ist, entlang einer Linie versetzt und in Neigung gebracht wird.

7. Anschlussstück (R7) nach Anspruch 3, **DADURCH GEKENNZEICHNET, DASS** der Versatz geschaffen wird, indem ein Außengewinde gemäß einer Achse geschaffen wird, welche entlang einer Linie versetzt und/oder gemäß einem Winkel geneigt ist.

8. Anschlussstück (R8) nach Anspruch 1, **DADURCH GEKENNZEICHNET, DASS** die Drehgelenkverbindung mittels einer Lippendichtung (300d) abgedichtet wird.

## Claims

1. Variable-geometry sealed coupling (R5) of the type of that connecting together two elements each arranged with a passage hole,
the sealed coupling comprising two hollow bodies (100d, 200d) preformed to pivot relative to each other,
with each body (100d, 200d) each comprising two ends, a first end (110d, 210d) and a second end (120d, 220d),
the two first ends (110d, 210d) being preformed to cooperate together and form a pivot connection,
the two second free ends (120d, 220d) each cooperating with the passage hole of one of the elements to be connected,
the axis (X1) of this pivot connection making it possible to switch the axes of the two free ends corresponding to the passage holes from a straight position to a bent position,
one first end of one first of the bodies being preformed with a cylindrically protruding shape (211d) cooperating with a cylindrical cavity (111d) preformed in the first end of a second of the bodies to carrying on the pivot connection,
at least one of the bodies (100d or 200d) being preformed in such a way that the axis (X2 or X3) of its second end corresponding to the passage hole of the element with which it is able to cooperate is offset with respect to the axis of the pivot connection (X1), and is therefore not secant nor is it confounded with the axis of the pivot connection (X1) that it forms with the other of the bodies in such a way that the rotation of the bodies (100d, 200d) together is facilitated due to the out-of-roundness of the axes.
**CHARACTERIZED IN THAT**
a clamping ring (Bs), guided in rotation at a first end (210d) of the first body (200d), by screwing cooperates with a thread preformed on the first end (110d) of the second body (100d), which makes it possible to block the two bodies (100d and 200d) in position once the correct angular position is reached.

2. Coupling (R5) according to claim 1, **CHARACTERIZED BY** THE FACT THAT the axis of this pivot connection makes it possible to switch the axes of the passage holes of said elements from a substantially coaxial position to a substantially perpendicular position.

3. Coupling (R6) according to any of claims 1 or 2, **CHARACTERIZED BY** THE FACT THAT the offset is a linear deviation.

4. Coupling (R5) according to any of claims 1 or 2, **CHARACTERIZED BY** THE FACT THAT the offset is a linear and angular deviation.

5. Coupling (R6) according to claim 3, **CHARACTERIZED BY** THE FACT THAT the offset is created by the linear offset of a bore and of an internal thread arranged in the free end of at least one of the bodies.

6. Coupling (R5) according to claim 4, **CHARACTERIZED BY** THE FACT THAT the offset is created by the linear offset and the inclination of a bore and of an internal thread arranged in the free end of at least one of the bodies.

7. Coupling (R7) according to claim 3, **CHARACTERIZED BY** THE FACT THAT the offset is created by the carrying out of an external thread along a linearly offset and/or angularly inclined axis.

8. Coupling (R8) according to claim 1, **CHARACTERIZED BY** THE FACT THAT said pivot connection is made tight by a lips seal (300d).
